(19) Europäisches Patentamt / European Patent Office / Office européen des brevets

(11) **EP 4 772 477 A1**

(12) **EUROPEAN PATENT APPLICATION**

(43) Date of publication:
08.07.2026  Bulletin 2026/28

(21) Application number: 25225335.6

(22) Date of filing: **18.12.2025**

(51) International Patent Classification (IPC):
*C01G 53/50* (2025.01)

(52) Cooperative Patent Classification (CPC):
**C01G 53/50;** C01P 2002/70; C01P 2006/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024  KR 20240191592**

(71) Applicants:
• SK innovation Co., Ltd.
  Seoul 03188 (KR)
• SK On Co., Ltd.
  Seoul 03161 (KR)

(72) Inventors:
• JANG, Hwan Ho
  Daejeon 34124 (KR)
• GIL, Na Eun
  Daejeon 34124 (KR)
• YU, Do Ae
  Daejeon 34124 (KR)
• KWON, Bob Jin
  Daejeon 34124 (KR)
• CHOI, Je Nam
  Daejeon 34124 (KR)

(74) Representative: **Stolmár & Partner Patentanwälte PartG mbB Blumenstraße 17 80331 München (DE)**

(54) **CATHODE ACTIVE MATERIAL FOR SECONDARY BATTERY, CATHODE FOR SECONDARY BATTERY, AND LITHIUM SECONDARY BATTERY INCLUDING THE SAME**

(57)    A cathode active material for a secondary battery according to one embodiment of the present disclosure includes a lithium metal oxide and has a C-axis lattice retention ratio ($R_{CL}$) of 95% to 97%, as defined by Equation 1 below.

[Equation 1]

$$R_{CL} = (C_{min} / C_{max}) \times 100$$

in Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

EP 4 772 477 A1

[FIG. 3]

Half-Cell Cycle Life

**Description**

BACKGROUND

1. Field of the Invention

The present disclosure relates to a cathode active material for a secondary battery, a cathode for a secondary battery, and a lithium secondary battery including the cathode.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickel-cadmium battery, and a nickel-hydrogen battery. Among these, the lithium secondary battery is actively developed and applied due to its high operating voltage, high energy density per unit weight, and advantages in charging speed and weight reduction.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

It is desirable for a lithium secondary battery to have a high capacity and to maintain operational and storage stability under extremely high or low temperature environments. Therefore, the development of a cathode capable of achieving a high-capacity and high-stability lithium secondary battery is required.

SUMMARY

An object of the present disclosure is to provide a cathode active material for a secondary battery having improved electrochemical properties.

Another object of the present disclosure is to provide a cathode for a secondary battery including the cathode active material.

Still another object of the present disclosure is to provide a lithium secondary battery including the cathode for a secondary battery.

A cathode active material for a secondary battery according to exemplary embodiments of the present disclosure includes a lithium metal oxide and having a C-axis lattice retention ratio ($R_{CL}$) of 95% to 97%, as defined by Equation 1 below:

$$[\text{Equation 1}]$$

$$R_{CL} = (C_{min} / C_{max}) \times 100$$

In Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

According to some embodiments, in Equation 1, the terminal voltage may be 4 V to 5 V.

According to some embodiments, in Equation 1, the charge voltage may be increased from 3 V or higher to less than 4 V.

According to some embodiments, in Equation 1, $C_{min}$, may be 13.78 to 14.5.

According to some embodiments, in Equation 1, $C_{max}$ may be 14 to 15.

According to some embodiments, the C-axis lattice constant may be measured by in-situ X-ray diffraction (in-situ XRD) analysis.

According to some embodiments, the lithium metal oxide may include nickel in an amount of 50 mol% to 90 mol%, based on the total molar amount of elements excluding lithium and oxygen.

According to some embodiments, the lithium metal oxide may further include cobalt, and the ratio of the molar amount of nickel to the molar amount of cobalt in the lithium metal oxide may be greater than 1 and less than or equal to 7, based on the total molar amount of elements excluding lithium and oxygen.

According to some embodiments, the lithium metal oxide may further include manganese, and the ratio of the molar amount of nickel to the molar amount of manganese in the lithium metal oxide may be 1.2 to 5, based on the total molar amount of elements excluding lithium and oxygen.

According to some embodiments, the cathode active material may satisfy Equation 2 below:

[Equation 2]

$$572 - 115 \times X < Y < 310 - 50.91 \times X$$

In Equation 2, X denotes the terminal voltage value in units of volts (V) of Equation 1, and Y denotes the nickel content in the lithium metal oxide in units of mol% based on the total molar amount of elements excluding lithium and oxygen.

According to some embodiments, the lithium metal oxide may have a crystal structure represented by Formula 1 below:

[Formula 1]    $Li_aNi_bM1_{1-b}O_c$

In Formula 1, $0 < a \leq 1.2$, $0.5 \leq b \leq 0.9$, and $2 \leq c \leq 2.02$, and M1 may include at least one selected from the group consisting of Co, Mn, Na, Mg, Ca, Ti, V, Cr, Cu, Zn, Ge, Sr, Ag, Ba, Zr, Nb, Mo, Al, Ga and B.

A cathode for a secondary battery according to exemplary embodiments of the present disclosure includes: a cathode current collector; and a cathode active material layer disposed on at least one surface of the cathode current collector, wherein the cathode active material layer includes a cathode active material for a secondary battery, the cathode active material including a lithium metal oxide and having a C-axis lattice retention ratio ($R_{CL}$) of 95% to 97%, as defined by Equation 1 below:

[Equation 1]

$$R_{CL} = (C_{min} / C_{max}) \times 100$$

In Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

According to some embodiments, in Equation 1, the terminal voltage may be 4 V to 5 V.

According to some embodiments, in Equation 1, the charge voltage may be increased from 3 V or higher to less than 4 V.

According to some embodiments, when the nickel content in the lithium metal oxide is 50 mol% to 65 mol% based on the total molar amount of elements excluding lithium and oxygen, the terminal voltage may be 4.4 V to 5 V.

According to some embodiments, when the nickel content in the lithium metal oxide is greater than 65 mol% and less than or equal to 80 mol% based on the total molar amount of elements excluding lithium and oxygen, the terminal voltage may be 4.35 V to 4.5 V.

According to some embodiments, when the nickel content in the lithium metal oxide is greater than 80 mol% and less than or equal to 90 mol% based on the total molar amount of elements excluding lithium and oxygen, the terminal voltage may be 4.22 V to 4.4 V.

A lithium secondary battery according to exemplary embodiments of the present disclosure includes: a cathode; and an anode disposed opposite the cathode; wherein the above cathode includes: a cathode current collector; and a cathode active material layer disposed on at least one surface of the cathode current collector, wherein the cathode active material layer includes a cathode active material for a secondary battery, the cathode active material including a lithium metal oxide and having a C-axis lattice retention ratio ($R_{CL}$) of 95% to 97%, as defined by Equation 1 below:

[Equation 1]

$$R_{CL} = (C_{min} / C_{max}) \times 100$$

In Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

According to some embodiments, the anode may include an anode current collector and an anode active material layer disposed on at least one surface of the anode current collector and including artificial graphite and a silicon-based active material.

According to some embodiments, the content of the silicon-based active material may be 2% by weight to 10% by weight of the total weight of the anode active material layer.

According to some embodiments, the content of the artificial graphite may be 65% by weight to 95% by weight of the total weight of the anode active material layer.

The cathode active material for a secondary battery according to embodiments of the present disclosure may maintain crystal structure stability even under high voltages, thereby preventing degradation of cycle life characteristics during repeated charge and discharge cycles and enabling the implementation of a battery with a high capacity.

The lithium secondary battery according to embodiments of the present disclosure includes the cathode and may maintain crystal structure stability even under high voltages, so that the capacity can remain close to the initial capacity during repeated charge and discharge cycles, thereby improving the cycle life characteristics of the battery.

The cathode active material, cathode, and battery of the present disclosure may be widely applied in green technology fields, such as electric vehicles, battery charging stations, as well as solar power generation, wind power generation, and the like, which use the batteries. In addition, the cathode active material, cathode, and battery of the present disclosure may be used in eco-friendly electric vehicles, hybrid vehicles, and the like, which are aimed at mitigating climate change by reducing air pollution and greenhouse gas emissions.

BRIEF DESCRIPTION OF THE DRAWINGS

The above and other objects, features and advantages of the present disclosure will be more clearly understood from the following detailed description taken in conjunction with the accompanying drawings, in which:

FIGS. 1 and 2 are schematic plan and cross-sectional views, respectively, illustrating a lithium secondary battery according to embodiments;
FIG. 3 is a graph illustrating the capacity retention as a function of the number of cycles for half-cells of the examples;
FIG. 4 is a graph illustrating the capacity retention as a function of the number of cycles for half-cells of Example 3 and Comparative Examples 1, 3 and 5;
FIG. 5 is a graph illustrating the capacity retention as a function of the number of cycles at 45 °C for secondary batteries of Examples 8 to 12 and Comparative Example 8; and
FIG. 6 is a graph illustrating the fast charge and discharge capacity retention as a function of the number of cycles for secondary batteries of Examples 8 to 12 and Comparative Example 8.

DETAILED DESCRIPTION

According to some embodiments of the present disclosure, a cathode for a secondary battery having improved crystal structure stability is provided. In addition, according to some embodiments of the present disclosure, a lithium secondary battery including the cathode for a secondary battery is provided.

Hereinafter, exemplary embodiments of the present disclosure will be described in detail with reference to the accompanying drawings. However, these embodiments are merely illustrative, and the present disclosure is not limited to the specific embodiments described as examples.

The cathode active material for a secondary battery according to the present disclosure includes lithium metal oxide particles. While lithium metal oxides may increase the capacity of a battery, their stability may be lower than that of a lithium metal phosphate, as described below.

According to some embodiments, the lithium metal oxide may include lithium, nickel, oxygen, and elements different from nickel. Among the elements of the lithium metal oxide, the content of nickel may be the highest, based on the total molar amount of elements excluding lithium and oxygen.

The lithium metal oxide may include nickel in an amount of 50 mol% to 90 mol% based on the total molar amount of elements excluding lithium and oxygen. For example, the content of nickel in the lithium metal oxide may be 55 mol% to 90 mol%, or 60 mol% to 88 mol%, based on the total molar amount of elements excluding lithium and oxygen.

According to some embodiments, the lithium metal oxide may include nickel, cobalt and manganese.

For example, nickel may be provided as a metal associated with the output and/or capacity of the lithium secondary battery. As the content of nickel increases, the capacity characteristics of the lithium metal oxide may improve, but its stability may decrease.

For example, manganese (Mn) may be provided as a metal associated with the mechanical and electrical stability of the lithium secondary battery. For instance, cobalt (Co) may be provided as a metal associated with the conductivity or resistance of the lithium secondary battery.

According to one embodiment, the content of cobalt in the lithium metal oxide may be greater than 0 and less than or equal to 20 mol%, based on the total molar amount of elements excluding lithium and oxygen. According to some embodiments, the content of cobalt in the lithium metal oxide may be 5 mol% to 15 mol%, based on the total molar amount of elements excluding lithium and oxygen.

According to some embodiment, the ratio of the molar amount of nickel to the molar amount of cobalt in the lithium metal oxide may be greater than 1 and less than or equal to 7, based on the total molar amount of elements excluding lithium and oxygen. According to some embodiment, the ratio of the molar amount of nickel to the molar amount of cobalt in the lithium metal oxide may be 4 to 6.5, based on the total molar amount of elements excluding lithium and oxygen.

According to one embodiment, the content of manganese in the lithium metal oxide may be greater than 0 and less than or equal to 40 mol%, based on the total molar amount of elements excluding lithium and oxygen. According to some embodiment, the content of manganese in the lithium metal oxide may be 25 mol% to 35 mol%, based on the total molar amount of elements excluding lithium and oxygen.

According to one embodiment, the ratio of the molar amount of nickel to the molar amount of manganese in the lithium metal oxide may be 1.2 to 5, based on the total molar amount of elements excluding lithium and oxygen. According to some embodiments, the ratio of the molar amount of nickel to the molar amount of manganese in the lithium metal oxide may be 1.5 to 2.5, based on the total molar amount of elements excluding lithium and oxygen.

Within the above range, the stability of the crystal structure and electrical conductivity may be improved without reducing the capacity of the lithium metal oxide.

According to some embodiments, the lithium metal oxide particles may include a crystal structure represented by Formula 1 below.

$$[\text{Formula 1}] \quad Li_aNi_bM1_{1-b}O_c$$

In Formula 1, a, b and c may satisfy $0<a\leq1.2$, $0.5\leq b\leq0.9$, and $2\leq c\leq2.02$, and M1 may include at least one selected from the group consisting of Co, Mn, Na, Mg, Ca, Ti, V, Cr, Cu, Zn, Ge, Sr, Ag, Ba, Zr, Nb, Mo, Al, Ga and B.

In some embodiments, in Formula 1, b may satisfy $0.6\leq b\leq0.88$.

According to some embodiment, the lithium metal oxide particles may have a crystal structure represented by Formula 1-1 below.

$$[\text{Formula 1-1}] \quad Li_aNi_bCo_cMn_dM2_{1-b-c-d}O_f$$

In Formula 1-1, a, b, c, d and f may satisfy $0<a\leq1.2$, $0.5\leq b\leq0.9$, $0<c\leq0.2$, $0<d\leq0.4$, $0.5<b+c+d\leq1$, and $2\leq f\leq2.02$, and M2 may include at least one selected from the group consisting of Na, Mg, Ca, Ti, V, Cr, Cu, Zn, Ge, Sr, Ag, Ba, Zr, Nb, Mo, Al, Ga and B.

In Formula 1-1, b may satisfy $0.6\leq b\leq0.88$.

In Formula 1-1, c may satisfy $0.01\leq c\leq0.15$.

In Formula 1-1, d may satisfy $0.03\leq d\leq0.35$.

In some embodiments, the concentration ratio (or molar ratio) of nickel, cobalt, and manganese in the lithium metal oxide particles may be adjusted to about 6:1:3.

According to some embodiments, the lithium metal oxide particles may further include a coating layer on the surface thereof. For example, the coating layer may include Al, Ti, Ba, Zr, Si, B, Mg, P, W, or an alloy or oxide thereof. These may be used alone or in combination of two or more thereof. By the coating layer, the active material particles may be passivated, thereby further enhancing the safety against penetration and cycle life of the battery.

In one embodiment, the elements, alloy, or oxide of the above-described coating layer may be inserted into the lithium metal oxide particles and/or the lithium metal phosphate particles as dopants.

The cathode active material for a secondary battery may have a C-axis lattice retention ratio ($R_{CL}$) of 95% to 97%, as defined by Equation 1 below.

$$[\text{Equation 1}]$$

$$R_{CL} = (C_{min} / C_{max}) \times 100$$

In Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

Increasing the charge voltage may indicate the operation of a battery including a cathode containing the cathode active material.

In one embodiment, in Equation 1, $C_{min}$ may be 13.78 to 14.5. In another embodiment, in Equation 1, $C_{min}$ may be 13.78 to 14.15.

In some embodiments, in Equation 1, $C_{max}$ may be 14 to 15. In some embodiments, in Equation 1, $C_{max}$ may be 14 to 14.6.

Within the above range, a battery with high capacity may be implemented while preventing degradation of cycle life characteristics during repeated charge and discharge cycles.

The C-axis lattice retention ratio may be calculated, for example, using $C_{min}$ and $C_{max}$, which are measured using the following method.

For example, a plurality of cells including a cathode and an anode containing the cathode active material may be configured. Each of the plurality of cells may be charged while the charge voltage was increased to different terminal voltages, and XRD analysis may be performed on the cathodes separated from each cell. The XRD analysis may be performed to measure the C-axis lattice constants, and the minimum and maximum values of the measured C-axis lattice constants may be $C_{min}$ and $C_{max}$, respectively, as defined by Equation 1.

The C-axis lattice constant may be calculated by Rietveld refinement of data obtained from X-ray diffraction (XRD).

If the C-axis lattice retention ratio defined by Equation 1 is less than 95%, the crystal structure of the cathode active material may rapidly change during intercalation and deintercalation of lithium ions. Accordingly, gas generation within the battery due to side reactions with the electrolyte may increase. Furthermore, the battery capacity may drop sharply, degrading the cycle life characteristics of the battery.

If the C-axis lattice retention ratio defined by Equation 1 exceeds 97%, the battery cannot be operated at sufficiently high voltages, resulting in reduced capacity and energy output from a cathode with the same loading.

In one embodiment, in Equation 1, the terminal voltage may be 4 V to 5 V. In some embodiments, in Equation 1, the terminal voltage may be 4.2 V to 4.9 V.

In some embodiments, in Equation 1, the charge voltage may be increased from 3 V or higher to less than 4 V. In some embodiments, in Equation 1, the charge voltage may be increased from 3 V to 3.8 V.

For example, when the nickel content in the lithium metal oxide is 50 mol% to 65 mol% based on the total molar amount of elements excluding lithium and oxygen, the terminal voltage may be about 4.4 V to 5 V.

For example, when the nickel content in the lithium metal oxide is greater than 65 mol% and less than or equal to 80 mol% based on the total molar amount of elements excluding lithium and oxygen, the terminal voltage may be about 4.35 V to 4.5 V.

For example, when the nickel content in the lithium metal oxide is greater than 80 mol% and less than or equal to 90 mol% based on the total molar amount of elements excluding lithium and oxygen, the terminal voltage may be about 4.22 V to 4.4 V.

The cathode active material for a secondary battery according to one embodiment may satisfy Equation 2 below.

[Equation 2]

$$572 - 115 \times X < Y < 310 - 50.91 \times X$$

In Equation 2, X may denote the terminal voltage value in units of volts (V) of Equation 1. Y may denote the nickel content in the lithium metal oxide in units of mol% based on the total molar amount of elements excluding lithium and oxygen.

When the cathode active material satisfies Equation 2, a cycle life of a predetermined level or higher may be ensured in the corresponding cathode material, and a high-capacity battery may be implemented.

A cathode for a secondary battery according to the present disclosure includes a cathode current collector and a cathode active material layer disposed on one surface of the cathode current collector. The cathode active material layer may be formed on one or both surfaces of the cathode current collector.

The cathode active material layer includes the cathode active material. The cathode active material includes a lithium metal oxide. The lithium metal oxide may be the same as described above.

The cathode active material may have a C-axis lattice retention ratio ($R_{CL}$) of 95% to 97%, as defined by Equation 1 below.

[Equation 1]

$$R_{CL} = (C_{min} / C_{max}) \times 100$$

In Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

Increasing the charge voltage may indicate operation of a cell including a cathode containing the cathode active material.

In one embodiment, in Equation 1, $C_{min}$ may be 13.78 to 14.5. In another embodiment, in Equation 1, $C_{min}$ may be 13.78 to 14.15.

In some embodiments, in Equation 1, $C_{max}$ may be 14 to 15. In some embodiments, in Equation 1, $C_{max}$ may be 14 to 14.6.

Within the above range, a battery with high capacity may be implemented while preventing degradation of cycle life characteristics during repeated charge and discharge cycles.

The C-axis lattice retention ratio may be calculated, for example, using $C_{min}$ and $C_{max}$, which are measured using the following method.

For example, a plurality of cells including a cathode and an anode containing the cathode active material may be configured. Each of the plurality of cells may be charged while the charge voltage was increased to different terminal voltages, and XRD analysis may be performed on the cathodes separated from each cell. The XRD analysis may be performed to measure the C-axis lattice constants, and the minimum and maximum values of the measured C-axis lattice constants may be $C_{min}$ and $C_{max}$, respectively, as defined by Equation 1.

If the C-axis lattice retention ratio defined by Equation 1 is less than 95%, the crystal structure of the cathode active material may rapidly change during intercalation and deintercalation of lithium ions. Accordingly, gas generation within the battery due to side reactions with the electrolyte may increase. Furthermore, the battery capacity may drop sharply, degrading the cycle life characteristics of the battery.

If the C-axis lattice retention ratio defined by Equation 1 exceeds 97%, the battery cannot be operated at sufficiently high voltages, resulting in reduced capacity and energy output from a cathode with the same loading.

In one embodiment, in Equation 1, the terminal voltage may be 4 V to 5 V. In some embodiments, in Equation 1, the terminal voltage may be 4.2 V to 4.9 V.

In some embodiments, in Equation 1, the charge voltage may be increased from 3 V or higher to less than 4 V. In some embodiments, in Equation 1, the charge voltage may be increased from 3 V to 3.8 V.

The cathode current collector may include, for example, stainless steel, nickel, aluminum, titanium, copper, or an alloy thereof, and preferably includes aluminum or an aluminum alloy.

In some embodiments, the cathode active material layer may include a cathode active material including a lithium metal oxide.

In some embodiments, a conductive material may be included to promote electron transfer between active material particles. For example, the conductive material may include carbon-based conductive materials such as graphite, carbon black, graphene, or carbon nanotubes; metal-based conductive materials such as tin, tin oxide, or titanium oxide; or perovskite materials such as $LaSrCoO_3$ or $LaSrMnO_3$. These may be used alone or in combination of two or more thereof.

According to one embodiment, the content of the conductive material, based on the total weight of the cathode active material layer, may be 0.1% by weight ("wt%") to 5 wt%. According to some embodiments, the content of the conductive material, based on the total weight of the cathode active material layer, may be 0.3 wt% to 2 wt%.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, the amount of the binder used to form the cathode active material layer may be reduced, and the amount of first cathode active material particles may be relatively increased, thereby improving the output and capacity of the secondary battery.

According to one embodiment, the content of the binder, based on the total weight of the cathode active material layer, may be 0.5 wt% to 10 wt%. According to some embodiments, the content of the binder, based on the total weight of the cathode active material layer, may be 1 wt% to 5 wt%.

According to some embodiment, the cathode active material layer may have a thickness of 10 $\mu$m to 100 $\mu$m. According to some embodiments, the cathode active material layer may have a thickness of 20 $\mu$m to 60 $\mu$m.

In one embodiment, the loading amount of the cathode active material layer may be 15 g/cm$^2$ to 30 g/cm$^2$. In some embodiments, the loading amount of the cathode active material layer may be 18 g/cm$^2$ to 25 g/cm$^2$. Within this range, the energy density of the cathode may be improved.

The secondary battery according to the present disclosure includes a cathode and an anode disposed opposite the cathode. The cathode includes: a cathode current collector; and a cathode active material layer disposed on at least one surface of the cathode current collector.

The cathode active material layer includes a cathode active material containing a lithium metal oxide, and includes a cathode active material for a secondary battery having a C-axis lattice retention ratio ($R_{CL}$) of 95% to 97%, as defined by Equation 1 below.

$$[\text{Equation 1}]$$

$$R_{CL} = (C_{min} / C_{max}) \times 100$$

In Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

Increasing the charge voltage may indicate operation of a cell including a cathode containing the cathode active material.

In one embodiment, in Equation 1, $C_{min}$ may be 13.78 to 14.5. In another embodiment, in Equation 1, $C_{min}$ may be 13.78 to 14.15.

In some embodiments, in Equation 1, $C_{max}$ may be 14 to 15. In some embodiments, in Equation 1, $C_{max}$ may be 14 to 14.6.

Within the above range, a battery with high capacity may be implemented while preventing degradation of cycle life characteristics during repeated charge and discharge cycles.

The C-axis lattice retention ratio may be calculated, for example, using $C_{min}$ and $C_{max}$, which are measured using the following method.

For example, a plurality of cells including a cathode and an anode containing the cathode active material may be configured. Each of the plurality of cells may be charged while the charge voltage was increased to different terminal voltages, and XRD analysis may be performed on the cathodes separated from each cell. The XRD analysis may be performed to measure the C-axis lattice constants, and the minimum and maximum values of the measured C-axis lattice constants may be $C_{min}$ and $C_{max}$, respectively, as defined by Equation 1.

If the C-axis lattice retention ratio defined by Equation 1 is less than 95%, the crystal structure of the cathode active material may rapidly change during intercalation and deintercalation of lithium ions. Accordingly, gas generation within the battery due to side reactions with the electrolyte may increase. Furthermore, the battery capacity may drop sharply, degrading the cycle life characteristics of the battery.

If the C-axis lattice retention ratio defined by Equation 1 exceeds 97%, the battery cannot be operated at sufficiently high voltages, resulting in reduced capacity and energy output from a cathode with the same loading.

In one embodiment, in Equation 1, the terminal voltage may be 4 V to 5 V. In some embodiments, in Equation 1, the terminal voltage may be 4.2 V to 4.9 V.

In some embodiments, in Equation 1, the charge voltage may be increased from 3 V or higher to less than 4 V. In some embodiments, in Equation 1, the charge voltage may be increased from 3 V to 3.8 V.

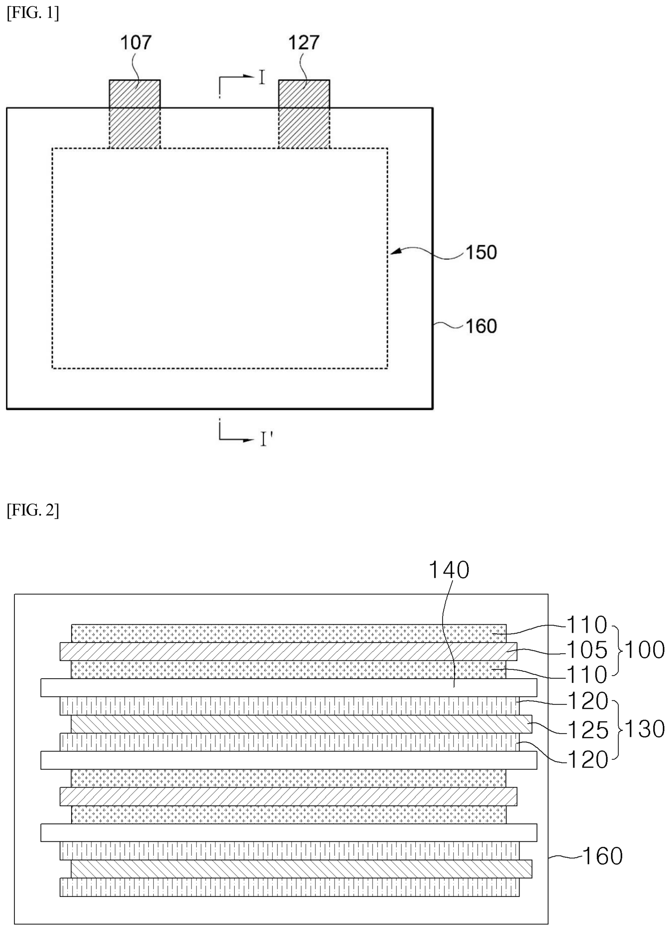

FIGS. 1 and 2 are schematic plan and cross-sectional views, respectively, illustrating a lithium secondary battery according to exemplary embodiments. Specifically, FIG. 2 is a cross-sectional view taken along line I-I' of FIG. 1 in the thickness direction of the lithium secondary battery.

Referring to FIGS. 1 and 2, a lithium secondary battery may include an electrode assembly 150 accommodated within a case 160. The electrode assembly 150 may include a cathode 100, an anode 130, and a separator 140 repeatedly stacked, as shown in FIG. 2.

The cathode 100 may include a cathode active material layer 110 formed on a cathode current collector 105. The cathode 100 may be the same as described above.

The anode 130 may include an anode current collector 125 and an anode active material layer 120 disposed on at least one surface of the anode current collector 125.

As the anode active material layer 120, any active material known in the art may be used, so long as it is capable of absorbing and releasing lithium ions. For example, carbon-based materials such as crystalline carbon, amorphous carbon, carbon composites, carbon fibers, etc.; a lithium alloy; silicon or tin may be used. Examples of the amorphous carbon may include hard carbon, coke, mesocarbon microbead (MCMB) calcined at 1500°C or lower, mesophase pitch-based carbon fiber (MPCF) or the like. Examples of the crystalline carbon may include graphite-based carbon such as natural graphite, graphitized coke, graphitized MCMB, graphitized MPCF or the like. Other elements included in the lithium alloy may include, for example, aluminum, zinc, bismuth, cadmium, antimony, silicon, lead, tin, gallium, indium or the like.

For example, the anode active material layer 120 may include artificial graphite and a silicon-based active material. The artificial graphite may have high structural stability, and the silicon-based active material may increase the capacity of the anode.

For example, the content of the silicon-based active material, based on the total weight of the anode active material layer 120, may be 2 wt% to 10 wt%. In some embodiments, the content of the silicon-based active material, based on the total weight of the anode active material layer 120, may be 3 wt% to 8 wt% or 3 wt% to 5 wt%.

Within the above range, the cycle life characteristics of the battery may be further improved.

For example, the content of the artificial graphite, based on the total weight of the anode active material layer 120, may be 50 wt% to 97 wt%. In some embodiments, the content of the artificial graphite, based on the total weight of the anode active material layer 120, may be 65 wt% to 95 wt%.

Within the above range, the volume stability of the anode may be further improved, and high capacity and high energy density may be achieved.

The anode current collector 125 may include, for example, gold, stainless steel, nickel, aluminum, titanium, copper, or an alloy thereof, preferably includes copper or a copper alloy.

In some embodiments, a slurry may be prepared by mixing the anode active material with a binder, a conductive material and/or a dispersant in a solvent, followed by stirring the mixture. The slurry may be coated on at least one surface of the anode current collector 125, followed by drying and compression to fabricate the anode 130.

As the binder and the conductive material, materials which are substantially the same as or similar to the above-described materials used in the cathode active material layer 110 may be used. In some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

The separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, etc.

In some embodiments, the anode 130 may have an area (e.g., a contact area with the separator 140) and/or volume greater than that of the cathode 100. Thereby, lithium ions generated from the cathode 100 may migrate smoothly to the anode 130 without being precipitated during the process, for example. Therefore, effects of simultaneously improving output and stability through a combination of a first cathode active material layer and a second cathode active material layer may be more easily implemented.

According to exemplary embodiments, an electrode cell is defined by the cathode 100, the anode 130, and the separator 140, and a plurality of electrode cells may be stacked to form, for example, a jelly roll type electrode assembly 150. For example, the electrode assembly 150 may be formed by winding, stacking, or folding the separator 140.

The electrode assembly 150 may be accommodated in the case 160 together with an electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, $Li^{+}X^{-}$, and as an anion ($X^{-}$) of the lithium salt, $F^{-}$, $Cl^{-}$, $Br^{-}$, $I^{-}$, $NO_3^{-}$, $N(CN)_2^{-}$, $BF_4^{-}$, $ClO_4^{-}$, $PF_6^{-}$, $(CF_3)_2PF_4^{-}$, $(CF_3)_3PF_3^{-}$, $(CF_3)_4PF_2^{-}$, $(CF_3)_5PF^{-}$, $(CF_3)_6P^{-}$, $CF_3SO_{3-}$, $CF_3CF_2SO_3^{-}$, $(CF_3SO_2)_2N^{-}$, $(FSO_2)_2N^{-}$, $CF_3CF_2(CF_3)_2CO^{-}$, $(CF_3SO_2)_2CH^{-}$, $(SF_5)_3C^{-}$, $(CF_3SO_2)_3C^{-}$, $CF_3(CF_2)_7SO_3^{-}$, $CF_3CO_2^{-}$, $CH_3CO_2^{-}$, $SCN^{-}$ and $(CF_3CF_2SO_2)_2N^{-}$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethylsulfuroxide, acetonitrile, dimethoxyethane, diethoxyethane, vinylene carbonate, sulfolane, $\gamma$-butyrolactone, propylene sulfite and tetrahydrofuran, etc. may be used. These may be used alone or in combination of two or more thereof.

As shown in FIG. 1, electrode tabs (cathode tabs and anode tabs) protrude from the cathode current collector 105 and the anode current collector 125, respectively, which belong to each electrode cell, and may extend to one side of the case 160. The electrode tabs may be welded together with the one side of the case 160 to form electrode leads (a cathode lead 107 and an anode lead 127) that extend or are exposed to an outside of the case 160.

FIG. 1 shows that the cathode lead 107 and the anode lead 127 protrude from an upper side of the case 160 in a planar direction, but positions of the electrode leads are not limited thereto. For example, the electrode leads may protrude from at least one of both sides of the case 160, or may protrude from a lower side of the case 160. Alternatively, the cathode lead 107 and the anode lead 127 may be formed so as to protrude from different sides of the case 160, respectively.

The lithium secondary battery may be manufactured, for example, in a cylindrical shape using a can, a prismatic shape, a pouch shape or a coin shape.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

## Example 1

Fabrication of cathode

A lithium metal oxide having a composition of $LiNi_{0.6}Co_{0.1}Mn_{0.3}O_2$, polyvinylidene fluoride (PVDF) as a binder, and multi-walled carbon nanotubes (MWCNTs) as a conductive material, and a carbon nanotube dispersant were mixed in a weight ratio of 98.26:0.9:0.7:0.14, and the mixture was dispersed in N-methyl-2-pyrrolidone (NMP) as a solvent to prepare a cathode slurry.
The cathode slurry was applied to one surface of aluminum foil (thickness: 12 $\mu$m thick), and then dried and roll-pressed to fabricate a cathode having a loading amount of 20 $g/cm^2$ and a density of 3.6 $g/cm^3$.

Manufacture of half-cell

A plurality of half-cells were manufactured using the cathode and a lithium metal foil (thickness: 1 mm) disposed opposite the cathode as a counter electrode.
The plurality of half-cells were charged from 3.7 V to 4.65 V at a constant current (CC) of 0.1 C, and the cells were disassembled at voltage intervals of 0.01 V. The separated cathodes were analyzed by X-ray diffraction (XRD) to calculate $C_{min}$, and $C_{max}$.
The X-ray diffraction analysis was performed under the following conditions.

- X-ray source anode: Cu
- Generator voltage: 45 kV; tube current: 40 mA
- Scan $2\theta$ range: 10-80°
- Step size: 0.00656°
- Time per scan: 100 s

## Example 2

The C-axis lattice constants ($C_{min}$, and $C_{max}$) were calculated in the same manner as in Example 1, except that the half-cell was analyzed while the charge voltage was increased from 3.7 V to 4.80 V.

## Example 3

The C-axis lattice constants ($C_{min}$, and $C_{max}$) were calculated in the same manner as in Example 1, except that the half-cell was analyzed while the charge voltage was increased from 3.7 V to 4.90 V.

## Example 4

A cathode was fabricated in the same manner as in Example 1, except that a cathode active material layer having a loading amount of 19.6 $g/cm^2$ and a density of 3.63 $g/cm^3$ was formed using a lithium metal oxide having a composition of $LiNi_{0.88}Co_{0.07}Mn_{0.05}O_2$.
In addition, the C-axis lattice constants ($C_{min}$, and $C_{max}$) were calculated in the same manner as in Example 1, except that the half-cell was analyzed while the charge voltage was increased from 3.7 V to 4.22 V.

## Example 5

The C-axis lattice constants ($C_{min}$, and $C_{max}$) were calculated in the same manner as in Example 4, except that the half-cell was analyzed while the charge voltage was increased from 3.7 V to 4.35 V.

## Example 6

A cathode was fabricated in the same manner as in Example 1, except that a lithium metal oxide having a composition of $LiNi_{0.765}Co_{0.015}Mn_{0.22}O_2$ was used to form a cathode active material layer having a loading amount of 21.6 $g/cm^2$ and a density of 3.6 $g/cm^3$.
In addition, the C-axis lattice constants ($C_{mm}$, and $C_{max}$) were calculated in the same manner as in Example 1, except that the half-cell was analyzed while the charge voltage was increased from 3.7 V to 4.35 V.

**Example 7**

The C-axis lattice constants ($C_{min}$, and $C_{max}$) were calculated in the same manner as in Example 6, except that the half-cell was analyzed while the charge voltage was increased from 3.7 V to 4.40 V.

**Comparative Example 1**

The C-axis lattice constants ($C_{min}$, and $C_{max}$) were calculated in the same manner as in Example 1, except that the half-cell was analyzed while the charge voltage was increased from 3.7 V to 5.20 V.

**Comparative Example 2**

The C-axis lattice constants ($C_{min}$, and $C_{max}$) were calculated in the same manner as in Example 1, except that the half-cell was analyzed while the charge voltage was increased from 3.7 V to 4.35 V.

**Comparative Example 3**

The C-axis lattice constants ($C_{min}$, and $C_{max}$) were calculated in the same manner as in Example 4, except that the half-cell was analyzed while the charge voltage was increased from 3.7 V to 4.45 V.

**Comparative Example 4**

The C-axis lattice constants ($C_{min}$, and $C_{max}$) were calculated in the same manner as in Example 4, except that the half-cell was analyzed while the charge voltage was increased from 3.7 V to 4.20 V.

**Comparative Example 5**

The C-axis lattice constants ($C_{min}$, and $C_{max}$) were calculated in the same manner as in Example 6, except that the half-cell was analyzed while the charge voltage was increased from 3.7 V to 4.60 V.

**Comparative Example 6**

The C-axis lattice constants ($C_{min}$, and $C_{max}$) were calculated in the same manner as in Example 6, except that the half-cell was analyzed while the charge voltage was increased from 3.7 V to 4.30 V.
The Ni, Co and Mn compositions, C-axis lattice constants, C-axis lattice retention ratios, and whether Equation 2 described above is satisfied for the cathode active materials of the examples and comparative examples are shown in Table 1 below.

[TABLE 1]

| Classification | Metal composition of lithium metal oxide (mol%) | | | C-axis lattice constant | | | Equation 2 |
|---|---|---|---|---|---|---|---|
| | Ni | Co | Mn | Lattice retention ratio (%) | $C_{max}$ | $C_{min}$ | |
| Example 1 | 60 | 10 | 30 | 96.5 | 14.54 | 14.03 | Satisfied |
| Example 2 | 60 | 10 | 30 | 95.9 | 14.54 | 13.95 | Satisfied |
| Example 3 | 60 | 10 | 30 | 95.5 | 14.54 | 13.89 | Satisfied |
| Example 4 | 88 | 7 | 5 | 96.5 | 14.50 | 13.99 | Satisfied |
| Example 5 | 88 | 7 | 5 | 95.0 | 14.50 | 13.78 | Satisfied |
| Example 6 | 76.5 | 1.5 | 22 | 96.7 | 14.51 | 14.03 | Satisfied |
| Example 7 | 76.5 | 1.5 | 22 | 96.0 | 14.51 | 13.93 | Satisfied |
| Comparative Example 1 | 60 | 10 | 30 | 94.6 | 14.54 | 13.76 | Not satisfied |

(continued)

| Classification | Metal composition of lithium metal oxide (mol%) | | | C-axis lattice constant | | | Equation 2 |
|---|---|---|---|---|---|---|---|
| | Ni | Co | Mn | Lattice retention ratio (%) | $C_{max}$ | $C_{min}$ | |
| Comparative Example 2 | 60 | 10 | 30 | 98.6 | 14.54 | 14.33 | Not satisfied |
| Comparative Example 3 | 88 | 7 | 5 | 94.3 | 14.50 | 13.67 | Not satisfied |
| Comparative Example 4 | 88 | 7 | 5 | 97.7 | 14.50 | 14.17 | Not satisfied |
| Comparative Example 5 | 76.5 | 1.5 | 22 | 94.8 | 14.51 | 13.75 | Not satisfied |
| Comparative Example 6 | 76.5 | 1.5 | 22 | 98.0 | 14.51 | 14.22 | Not satisfied |

## Experimental Example 1: Evaluation of room-temperature cycle life characteristics

For the half-cells of the examples and comparative examples, charging was performed at 25°C under CC-CV conditions of 0.1 C, at the corresponding voltage, and with a 0.05 C cut-off, and discharging was performed under CC conditions of 0.1 C with a 3.0 V cut-off. This charge-discharge process was defined as one cycle, and 200 cycles were repeatedly performed. The discharge capacity after the first cycle and the capacity retentions at the 50th, 100th, 150th, and 200th cycles are shown in Table 2.

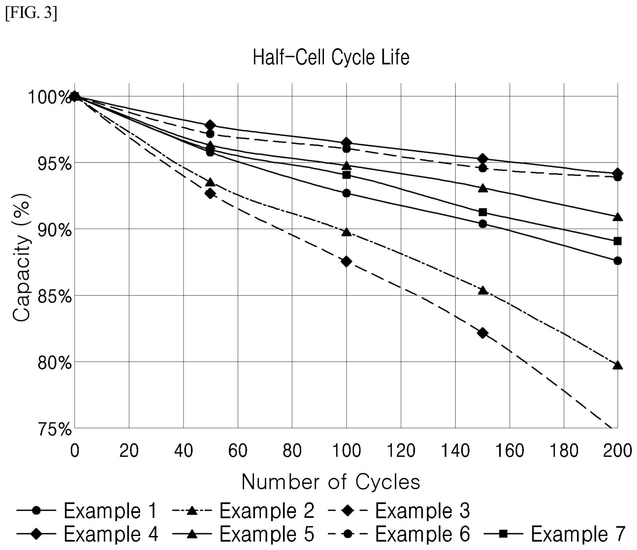

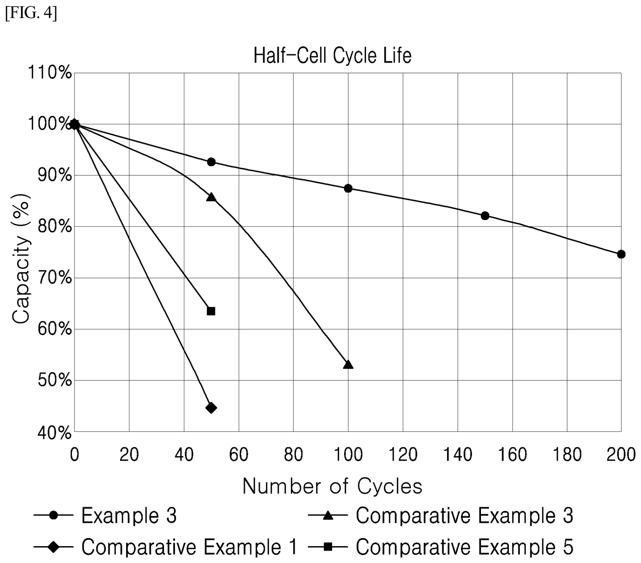

FIG. 3 is a graph illustrating the capacity retention as a function of the number of cycles for the half-cells of the examples, and FIG. 4 is a graph illustrating the capacity retention as a function of the number of cycles for the half-cells of Example 3 and Comparative Examples 1, 3 and 5.

[TABLE 2]

| Classification | Room-temperature cycle life characteristics (%) | | | | Discharge capacity |
|---|---|---|---|---|---|
| | 50 cycles | 100 cycles | 150 cycles | 200 cycles | (g/mAh) |
| Example 1 | 95.8% | 92.7% | 90.4% | 87.6% | 213.5 |
| Example 2 | 93.5% | 89.8% | 85.4% | 79.8% | 220.4 |
| Example 3 | 92.7% | 87.6% | 82.2% | 74.7% | 223.6 |
| Example 4 | 97.8% | 96.5% | 95.3% | 94.1% | 208.0 |
| Example 5 | 96.3% | 94.8% | 93.1% | 90.9% | 216.5 |
| Example 6 | 97.2% | 96.1% | 94.6% | 93.9% | 199.0 |
| Example 7 | 96.0% | 94.1% | 91.3% | 89.1% | 204.0 |
| Comparative Example 1 | 44.9% | Sharp drop | - | - | 229.0 |
| Comparative Example 2 | 98.4% | 97.7% | 97.1% | 96.8% | 183.7 |
| Comparative Example 3 | 86.0% | 53.4% | Sharp drop | | 220.9 |
| Comparative Example 4 | 98.1% | 97.0% | 96.2% | 95.3% | 205.5 |
| Comparative Example 5 | 63.5% | Sharp drop | - | - | 214.7 |
| Comparative Example 6 | 97.9% | 97.1% | 96.0% | 95.4% | 190.0 |

Referring to Table 2 and FIG. 3, half-cells including the cathodes of the examples exhibited improved room-temperature cycle life characteristics, showing a capacity retention of 55% or higher after 200 repeated charge-discharge cycles.

Referring to FIG. 4, the cycle life characteristics of the batteries including the cathode active materials of the comparative examples were further degraded compared to those of Example 3, which exhibited the least improvement in FIG. 3. In addition, among the half-cells including the cathodes of the comparative examples, those having a C-axis lattice retention ratio of less than 95% showed a sharp decrease in capacity before completion of 200 cycles, making the capacity retention impossible to measure. Furthermore, among the half-cells including the cathodes of the comparative examples, those having a C-axis lattice retention ratio of greater than 97% were unable to operate at sufficiently high voltages, resulting in reduced capacity and energy output from cathodes having the same loading.

## Example 8

Manufacture of full cell

Artificial graphite, a silicon-based active material (SiOx, 0<x<2), single-walled carbon nanotubes (SWCNTs) as a conductive material, a carbon nanotube dispersant, carboxymethyl cellulose as a thickener, and styrene-butadiene rubber as a binder were mixed in a weight ratio of 92.05:5:0.1:0.15:1.2:1.5, and the mixture was dispersed in water as a solvent to prepare a anode slurry.

The anode slurry was applied to both surface of a copper foil, and then dried and roll-pressed to fabricate an anode including an anode active material layer having a loading amount of 11.4 $g/cm^2$ and a density of 1.55 $g/cm^3$.

A laminate was formed by interposing a separator having a total thickness of 13 $\mu$m, obtained by coating both surfaces of an 11 $\mu$m-thick porous polyethylene film with a 1 $\mu$m-thick inorganic layer, between a cathode fabricated in the same manner as in Example 1 and the anode.

The laminate was placed in a pouch, sealed on three sides, injected with an electrolyte, and then sealed on the remaining side.

The electrolyte used was a 1M $LiPF_6$ solution dissolved in a solvent containing ethylene carbonate and ethyl methyl carbonate in a volume ratio of 20:80.

The sizes of the cathode, anode, and separator used are as follows:
Cathode: 262 mm $\times$ 102 mm; Anode: 267 mm $\times$ 105 mm; Separator: 274 mm $\times$ 106.5 mm.

The laminate was stacked in the following order: separator/anode/separator/cathode, and finally, separator/-anode/separator/separator. The number of layers of the cathode, anode, and polyethylene film used in the laminate were as follows:
Cathode: 37, Anode: 38, Separator: 78

A plurality of full cells were manufactured and charged from 3.7 V to 4.65 V at a constant current (CC) of 0.1 C, and the cells were disassembled at voltage intervals of 0.01 V. The separated cathodes were analyzed by X-ray diffraction (XRD) to calculate $C_{min}$ and $C_{max}$.

The X-ray diffraction analysis was performed under the following conditions.

- X-ray source anode: Cu
- Generator voltage: 45 kV; tube current: 40 mA
- Scan 2$\theta$ range: 10-80°
- Step size: 0.00656°
- Time per scan: 100s

## Example 9

Full cells were manufactured in the same manner as in Example 8, except that the cathode fabricated in the same manner as in Example 5 was used. A plurality of full cells were charged from 3.7 V to 4.35 V at a constant current (CC) of 0.1 C, and the cells were disassembled at voltage intervals of 0.01 V. The separated cathodes were analyzed by X-ray diffraction (XRD) to calculate $C_{min}$ and $C_{max}$.

## Example 10

Full cells were manufactured in the same manner as in Example 9, except that the anode was fabricated by mixing artificial graphite, a silicon-based active material (SiOx, 0<x<2), single-walled carbon nanotubes (SWCNTs) as a conductive material, a carbon nanotube dispersant, carboxymethyl cellulose as a thickener, and styrene-butadiene rubber as a binder in a weight ratio of 94.05:3:0.1:0.15:1.2:1.5, and controlling the loading amount of the anode active material layer to 12.4 $g/cm^2$. A plurality of full cells were charged from 3.7 V to 4.35 V at a constant current (CC) of 0.1 C, and the cells were disassembled at voltage intervals of 0.01 V. The separated cathodes were analyzed by X-ray diffraction (XRD) to calculate $C_{min}$ and $C_{max}$.

## Example 11

Full cells were manufactured in the same manner as in Example 9, except that the anode was fabricated by mixing artificial graphite, natural graphite, silicon-based active materials (SiOx, 0<x<2), single-walled carbon nanotubes

# EP 4 772 477 A1

(SWCNTs) as a conductive agent, a carbon nanotube dispersant, carboxymethyl cellulose as a thickener, and styrene-butadiene rubber as a binder in a weight ratio of 64.435:27.615:5:0.1:0.15:1.2:1.5. A plurality of full cells were charged from 3.7 V to 4.35 V at a constant current (CC) of 0.1 C, and the cells were disassembled at voltage intervals of 0.01 V. The separated cathodes were analyzed by X-ray diffraction (XRD) to calculate $C_{min}$ and $C_{max}$.

## Example 12

Full cells were manufactured in the same manner as in Example 8, except that the cathode fabricated in the same manner as in Example 6 was used. A plurality of full cells were charged from 3.7 V to 4.35 V at a constant current (CC) of 0.1 C, and the cells were disassembled at voltage intervals of 0.01 V. The separated cathodes were analyzed by X-ray diffraction (XRD) to calculate $C_{min}$ and $C_{max}$.

## Comparative Example 7

Full cells were manufactured in the same manner as in Example 9, except that the cathode fabricated in the same manner as in Comparative Example 4 was used. A plurality of full cells were charged from 3.7 V to 4.20 V at a constant current (CC) of 0.1 C, and the cells were disassembled at voltage intervals of 0.01 V. The separated cathodes were analyzed by X-ray diffraction (XRD) to calculate $C_{min}$ and $C_{max}$.

## Comparative Example 8

Full cells were manufactured in the same manner as in Example 8, except that the cathode fabricated in the same manner as in Comparative Example 3 was used. The C-axis lattice constants ($C_{min}$, $C_{max}$) were calculated in the same manner as in Example 4, except that a plurality of full cells were charged from 3.7 V to 4.45 V at a constant current (CC) of 0.1 C, and the cells were disassembled at voltage intervals of 0.01 V, then the separated cathodes were analyzed by X-ray diffraction (XRD).

The Ni, Co and Mn compositions, C-axis lattice constants, C-axis lattice retention ratios, and whether Equation 2 described above is satisfied for the cathode active materials of the examples and comparative examples are shown in Table 3 below.

[TABLE 3]

| Classification | Metal composition of lithium metal oxide (mol%) | | | C-axis lattice constant | | | Equation 2 |
| --- | --- | --- | --- | --- | --- | --- | --- |
| | Ni | Co | Mn | Lattice retention ratio (%) | $C_{max}$ | $C_{min}$ | |
| Example 8 | 60 | 10 | 30 | 96.5 | 14.54 | 14.03 | Satisfied |
| Example 9 | 88 | 7 | 5 | 95.0 | 14.50 | 13.78 | Satisfied |
| Example 10 | 88 | 7 | 5 | 95.0 | 14.50 | 13.78 | Satisfied |
| Example 11 | 88 | 7 | 5 | 95.0 | 14.50 | 13.78 | Satisfied |
| Example 12 | 76.5 | 1.5 | 22 | 96.7 | 14.51 | 14.03 | Satisfied |
| Comparative Example 7 | 88 | 7 | 5 | 97.7 | 14.50 | 14.17 | Not satisfied |
| Comparative Example 8 | 88 | 7 | 5 | 94.3 | 14.50 | 13.67 | Not satisfied |

## Experimental Example 3: Evaluation of high-temperature cycle life characteristics

The secondary batteries of Examples 8 to 12 and Comparative Examples 7 and 8 were charged and discharged at 45 °C at a SOC of 4%, with one cycle consisting of charging (CC-CV, 1/3 C, SOC 98%, 0.05 C cut-off) and discharging (CC, 1/3 C, SOC 4% cut-off). The cycles were repeated with a 20-minute rest period between charge and discharge cycles, and the capacity retention at 45 °C was measured. The capacity retentions at the 200th, 400th, 600th, and 800th cycles are shown in Table 4 below.

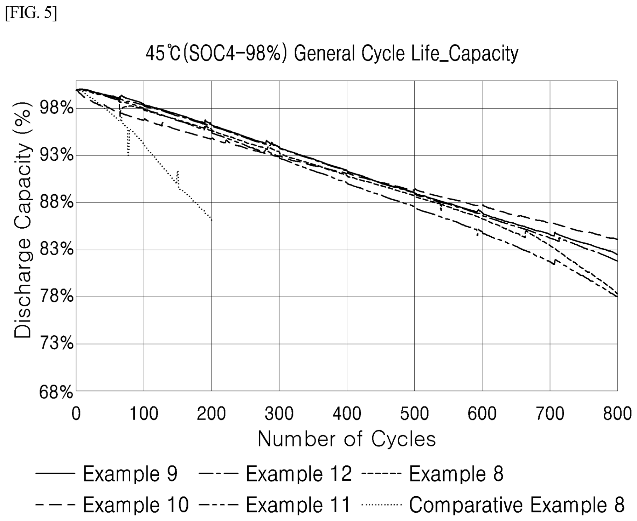

FIG. 5 is a graph illustrating the capacity retention as a function of the number of cycles at 45 °C for the secondary batteries of Examples 8 to 12 and Comparative Example 8.

**Experimental Example 4: Evaluation of fast charge and discharge cycle life characteristics**

The secondary batteries of Examples 8 to 12 and Comparative Examples 7 and 8 were rapidly charged and discharged at 25 °C within a DOD 70 %(SOC 10-80%) range, with stepwise charging at C-rates of 2.5 C, 2.25 C, 2.0 C, 1.75 C, 1.5 C, 1.25 C and 1.0 C and discharging at a C-rate of 1/3 C, which was defined as one cycle. The cycles were repeated with a 20-minute rest period between charge and discharge cycles, and the fast charge capacity retention was measured. The capacity retentions at the 100th, 200th, 300th, and 400th cycles are shown in Table 4 below.

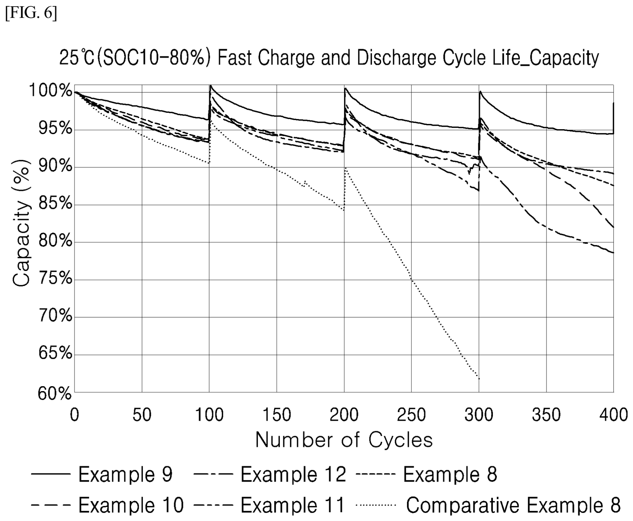

FIG. 6 is a graph illustrating the fast charge and discharge capacity retention as a function of the number of cycles for the secondary batteries of Examples 8 to 12 and Comparative Example 8.

**Experimental Example 5: Evaluation of battery discharge capacity and energy density**

The secondary batteries of Examples 8 to 12 and Comparative Examples 7 and 8 were charged at 0.3 C and discharged at 0.3 C, respectively, to measure the discharge capacity. Furthermore, the battery thickness at 30% SOC was measured, and the relative energy density was evaluated by dividing the discharge capacity by the battery thickness at 30% SOC. The evaluation results are shown in Table 5 below.

[TABLE 4]

| | 45°C cycle life characteristics (capacity retention) | | | | Fast charge and discharge cycle life characteristics (capacity retention) | | | |
|---|---|---|---|---|---|---|---|---|
| | 200 cycles | 400 cycles | 600 cycles | 800 cycles | 100 cycles | 200 cycles | 300 cycles | 400 cycles |
| Example 8 | 95.9% | 91.0% | 86.3% | 78.3% | 93.8% | 92.8% | 91.4% | 87.6% |
| Example 9 | 96.4% | 91.4% | 87.0% | 82.6% | 95.8% | 94.8% | 93.9% | 92.9% |
| Example 10 | 94.8% | 91.1% | 87.6% | 84.1% | 93.5% | 92.9% | 91.0% | 82.0% |
| Example 11 | 95.7% | 90.2% | 84.9% | 78.0% | 93.3% | 92.2% | 86.8% | 78.5% |
| Example 12 | 96.5% | 91.4% | 86.7% | 81.8% | 93.4% | 92.0% | 90.2% | 89.2% |
| Comparati ve Example 7 | 95.0% | 91.5% | 88.3% | 85.2% | 96.4% | 95.7% | 95.1% | 94.5% |
| Comparati ve Example 8 | 86.2% | Sharp drop | - | - | 90.5% | 84.3% | 61.7% | - |

[TABLE 5]

| | Full cell 0.3C capacity | Full cell thickness at shipment | Capacity per thickness |
|---|---|---|---|
| | Discharge (Ah) | SOC 30% (mm) | Discharge capacity / Thickness at SOC 30% |
| Example 8 | 80.6 | 12.7 | 6.36 |
| Example 9 | 80.3 | 12.7 | 6.33 |
| Example 10 | 81.8 | 13.2 | 6.19 |
| Example 11 | 79.9 | 12.7 | 6.30 |
| Example 12 | 80.1 | 13.0 | 6.16 |
| Comparative Example 7 | 75.6 | 12.7 | 5.96 |
| Comparative Example 8 | 81.9 | 12.9 | 6.36 |

Referring to Tables 4 and 5, and FIGS. 5 and 6, the batteries of the examples exhibited high capacity retention of 78% or higher even after repeated high-temperature charge and discharge, and maintained a capacity retention of 78.5% or higher even after 400 cycles of repeated fast charge and discharge.

In contrast, the battery of Comparative Example 8 exhibited significantly deteriorated cycle-life characteristics. In particular, the capacity retention of Comparative Example 8 sharply dropped after only 400 cycles of repeated charge and discharge at 45 °C. The battery of Comparative Example 7 exhibited a C-axis lattice retention ratio exceeding 97%, which resulted in a reduced ratio of discharge capacity per cell thickness, thereby lowering the energy density of the battery.

The contents described above are merely examples of applying the principles of the present disclosure, and other configurations may be further included without departing from the scope of the present disclosure.

The invention relates also to the following numbered aspects:

Aspect 1. A cathode active material for a secondary battery, comprising a lithium metal oxide and having a C-axis lattice retention ratio ($R_{CL}$) of 95% to 97%, as defined by Equation 1 below:

$$[\text{Equation 1}]$$

$$R_{CL} = (C_{min} / C_{max}) \times 100$$

in Equation 1, $R_{CL}$ denotes the C-axis lattice retention ratio, and $C_{min}$ and $C_{max}$ respectively denote the minimum and maximum values of the C-axis lattice constant of the cathode active material, as observed by X-ray diffraction (XRD) analysis while the charge voltage is increased to a terminal voltage.

Aspect 2. The cathode active material for a secondary battery according to aspect 1, wherein in Equation 1, the terminal voltage is 4 V to 5 V.

Aspect 3. The cathode active material for a secondary battery according to aspect 1 or 2, wherein in Equation 1, the charge voltage is increased from 3 V or higher to less than 4 V.

Aspect 4. The cathode active material for a secondary battery according to any one of aspects 1 to 3, wherein in Equation 1, $C_{min}$ is 13.78 to 14.5.

Aspect 5. The cathode active material for a secondary battery according to any one of aspects 1 to 4, wherein in Equation 1, $C_{max}$ is 14 to 15.

Aspect 6. The cathode active material for a secondary battery according to any one of aspects 1 to 5, wherein the lithium metal oxide comprises nickel in an amount of 50 mol% to 90 mol%, based on the total molar amount of elements excluding lithium and oxygen.

Aspect 7. The cathode active material for a secondary battery according to aspect 6, wherein the lithium metal oxide further comprises cobalt, and the ratio of the molar amount of nickel to the molar amount of cobalt in the lithium metal oxide is greater than 1 and less than or equal to 7, based on the total molar amount of elements excluding lithium and oxygen.

Aspect 8. The cathode active material for a secondary battery according to aspect 6 or 7, wherein the lithium metal oxide further comprises manganese, and the ratio of the molar amount of nickel to the molar amount of manganese in the lithium metal oxide is 1.2 to 5, based on the total molar amount of elements excluding lithium and oxygen.

Aspect 9. The cathode active material for a secondary battery according to any one of aspects 6 to 8, wherein the cathode active material satisfies Equation 2 below:

$$[\text{Equation 2}]$$

$$572 - 115 \times X < Y < 310 - 50.91 \times X$$

in Equation 2, X denotes the terminal voltage value in units of volts (V) of Equation 1, and Y denotes the nickel content in the lithium metal oxide in units of mol% based on the total molar amount of elements excluding lithium and oxygen.

Aspect 10. The cathode active material for a secondary battery according to any one of aspects 1 to 9, wherein the lithium metal oxide has a crystal structure represented by Formula 1 below:

[Formula 1]          $Li_aNi_bM1_{1-b}O_c$

In Formula 1, $0 < a \leq 1.2$, $0.5 \leq b \leq 0.9$, and $2 \leq c \leq 2.02$, and M1 includes at least one selected from the group consisting of Co, Mn, Na, Mg, Ca, Ti, V, Cr, Cu, Zn, Ge, Sr, Ag, Ba, Zr, Nb, Mo, Al, Ga and B.

Aspect 11. A cathode for a secondary battery comprising:

a cathode current collector; and
a cathode active material layer disposed on at least one surface of the cathode current collector,
wherein the cathode active material layer comprises the cathode active material according to any one of aspects 1 to 10.

Aspect 12. The cathode for a secondary battery according to aspect 11, wherein, when the nickel content in the lithium metal oxide is 50 mol% to 65 mol% based on the total molar amount of elements excluding lithium and oxygen, the terminal voltage is 4.4 V to 5 V, when the nickel content in the lithium metal oxide is greater than 65 mol% and less than or equal to 80 mol% based on the total molar amount of elements excluding lithium and oxygen, the terminal voltage is 4.35 V to 4.5 V, and when the nickel content in the lithium metal oxide is greater than 80 mol% and less than or equal to 90 mol% based on the total molar amount of elements excluding lithium and oxygen, the terminal voltage is 4.22 V to 4.4 V.

Aspect 13. A lithium secondary battery comprising:

   a cathode; and an anode disposed opposite the cathode;
   wherein the above cathode comprises:

      a cathode current collector; and
      a cathode active material layer disposed on at least one surface of the cathode current collector,
      wherein the cathode active material layer comprises the cathode active material according to any one of aspects 1 to 10.

Aspect 14. The lithium secondary battery according to aspect 13, wherein the anode comprises an anode current collector and an anode active material layer disposed on at least one surface of the anode current collector and including artificial graphite and a silicon-based active material.

Aspect 15. The lithium secondary battery according to aspect 14, wherein the content of the silicon-based active material is 2% by weight to 10% by weight of the total weight of the anode active material layer and/or the content of the artificial graphite is 65% by weight to 95% by weight of the total weight of the anode active material layer.

**Claims**

1. A cathode active material for a secondary battery, comprising a lithium metal oxide and having a C-axis lattice retention ratio ($R_{CL}$) of 95% to 97%, as defined by Equation 1 below:

$$[\text{Equation 1}]$$

$$R_{CL} = (C_{min} / C_{max}) \times 100$$

   wherein, in Equation 1, $R_{CL}$ denotes the C-axis lattice retention ratio, and $C_{min}$ and $C_{max}$ denote minimum and maximum values of a C-axis lattice constant of the cathode active material, respectively, as observed by X-ray diffraction (XRD) analysis while a charge voltage is increased to a terminal voltage.

2. The cathode active material for a secondary battery according to claim 1, wherein in Equation 1, the terminal voltage is 4 V to 5 V.

3. The cathode active material for a secondary battery according to claim 1 or 2, wherein in Equation 1, the charge voltage is increased from 3 V or higher to less than 4 V.

4. The cathode active material for a secondary battery according to any one of claims 1 to 3, wherein in Equation 1, $C_{min}$ is 13.78 to 14.5.

5. The cathode active material for a secondary battery according to any one of claims 1 to 4, wherein in Equation 1, $C_{max}$ is 14 to 15.

6. The cathode active material for a secondary battery according to any one of claims 1 to 5, wherein the lithium metal oxide comprises nickel in an amount of 50 mol% to 90 mol%, based on the total molar amount of elements excluding lithium and oxygen.

7. The cathode active material for a secondary battery according to claim 6, wherein the lithium metal oxide further comprises cobalt, and
the ratio of the molar amount of nickel to the molar amount of cobalt in the lithium metal oxide is greater than 1 and less than or equal to 7, based on the total molar amount of elements excluding lithium and oxygen.

8. The cathode active material for a secondary battery according to claim 6 or 7, wherein the lithium metal oxide further comprises manganese, and
the ratio of the molar amount of nickel to the molar amount of manganese in the lithium metal oxide is 1.2 to 5, based on the total molar amount of elements excluding lithium and oxygen.

9. The cathode active material for a secondary battery according to any one of claims 6 to 8, wherein the cathode active material satisfies Equation 2 below:

[Equation 2]

$$572 - 115 \times X < Y < 310 - 50.91 \times X$$

in Equation 2, X denotes the terminal voltage value in units of volts (V) of Equation 1, and
Y denotes the nickel content in the lithium metal oxide in units of mol% based on the total molar amount of elements excluding lithium and oxygen.

10. The cathode active material for a secondary battery according to any one of claims 1 to 9, wherein the lithium metal oxide has a crystal structure represented by Formula 1 below:

[Formula 1]  $Li_aNi_bM1_{1-b}O_c$

In Formula 1, $0<a\leq1.2$, $0.5\leq b\leq0.9$, and $2\leq c\leq2.02$, and M1 includes at least one selected from the group consisting of Co, Mn, Na, Mg, Ca, Ti, V, Cr, Cu, Zn, Ge, Sr, Ag, Ba, Zr, Nb, Mo, Al, Ga and B.

11. A cathode for a secondary battery comprising:

a cathode current collector; and
a cathode active material layer disposed on at least one surface of the cathode current collector,
wherein the cathode active material layer comprises the cathode active material according to any one of claims 1 to 10.

12. The cathode for a secondary battery according to claim 11, wherein, when the nickel content in the lithium metal oxide is 50 mol% to 65 mol% based on the total molar amount of elements excluding lithium and oxygen, the terminal voltage is 4.4 V to 5 V, when the nickel content in the lithium metal oxide is greater than 65 mol% and less than or equal to 80 mol% based on the total molar amount of elements excluding lithium and oxygen, the terminal voltage is 4.35 V to 4.5 V, and when the nickel content in the lithium metal oxide is greater than 80 mol% and less than or equal to 90 mol% based on the total molar amount of elements excluding lithium and oxygen, the terminal voltage is 4.22 V to 4.4 V.

13. A lithium secondary battery comprising:

a cathode; and
an anode disposed opposite the cathode;
wherein the above cathode comprises:

a cathode current collector; and
a cathode active material layer disposed on at least one surface of the cathode current collector,
wherein the cathode active material layer comprises the cathode active material according to any one of claims 1 to 10.

14. The lithium secondary battery according to claim 13, wherein the anode comprises an anode current collector and an anode active material layer disposed on at least one surface of the anode current collector and including artificial graphite and a silicon-based active material.

15. The lithium secondary battery according to claim 14, wherein the content of the silicon-based active material is 2% by weight to 10% by weight of the total weight of the anode active material layer and/or the content of the artificial graphite is 65% by weight to 95% by weight of the total weight of the anode active material layer.

[FIG. 1]

[FIG. 2]

[FIG. 3]

Half-Cell Cycle Life

[FIG. 4]

Half-Cell Cycle Life

[FIG. 5]

45℃(SOC4-98%) General Cycle Life_Capacity

—— Example 9    —·— Example 12    ------ Example 8
– – – Example 10    ---- Example 11    ·········· Comparative Example 8

[FIG. 6]

25℃(SOC10-80%) Fast Charge and Discharge Cycle Life_Capacity

—— Example 9  —·— Example 12  ------ Example 8
– – – Example 10  ---- Example 11  ············ Comparative Example 8

## EUROPEAN SEARCH REPORT

**Application Number**

EP 25 22 5335

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 804 601 B2 (SAFT AMERICA [US]) 31 October 2023 (2023-10-31) * example 2 * ----- | 1-15 | INV. C01G53/50 |
| X | US 2020/335782 A1 (OH JI WOO [KR] ET AL) 22 October 2020 (2020-10-22) * table 1 * ----- | 1-15 | |

**TECHNICAL FIELDS SEARCHED (IPC)**

C01G

The present search report has been drawn up for all claims

| Place of search | Date of completion of the search | Examiner |
|---|---|---|
| Munich | 27 May 2026 | Timmermans, Michel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................
& : member of the same patent family, corresponding
    document

EPO FORM 1503 03.82 (P04C01)

# EP 4 772 477 A1

## ANNEX TO THE EUROPEAN SEARCH REPORT
## ON EUROPEAN PATENT APPLICATION NO.

EP 25 22 5335

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2026

| Patent document cited in search report | | Publication date | Patent family member(s) | | Publication date |
|---|---|---|---|---|---|
| US 11804601 | B2 | 31-10-2023 | CN | 114375515 A | 19-04-2022 |
| | | | EP | 4029071 A1 | 20-07-2022 |
| | | | US | 2021083289 A1 | 18-03-2021 |
| | | | WO | 2021048796 A1 | 18-03-2021 |
| US 2020335782 | A1 | 22-10-2020 | KR | 101930530 B1 | 19-12-2018 |
| | | | US | 2020335782 A1 | 22-10-2020 |
| | | | WO | 2019088345 A1 | 09-05-2019 |

EPO FORM P0459

For more details about this annex : see Official Journal of the European Patent Office, No. 12/82